# EUROPÄISCHE PATENTANMELDUNG

(11) **EP 1 190 948 A2**
(43) Veröffentlichungstag der Anmeldung: **27.03.2002**
(21) Anmeldenummer: 01120930.1
(22) Anmeldetag: 31.08.2001
(51) Int. Cl.: B64G 1/10, B64G 1/64

(54) **Vorrichtung zum Bergen von Raumflugkörpern**

(30) Priorität: 22.09.2000 DE 10047518; 01.12.2000 DE 10059914
(71) Anmelder: Astrium GmbH, 85521 Ottobrunn (DE)
(72) Erfinder: Steinsiek, Frank, 28205 Bremen (DE); Günther, Hansjürgen, 28717 Bremen (DE); Bischof, Bernd, 27777 Ganderkeese (DE)
(74) Vertreter: Hansmann, Dierk, Dipl.-Ing.

(57) **Zusammenfassung**

Es ist hierbei vorgesehen, daß ein Bergefahrzeug (1) mit einem Antrieb (11) über ein mastartiges Halteelement (3) eine Verbindung zu einem zu bergenden Raumflugkörper (5) herstellt. Hierbei ist vorgesehen, daß das Halteelement an seinem freien Ende einstellbare Spreizelemente (4) in Form von Armen aufweist die in einem korrespondierenden Interface-Ring (6) des zu bergenden Flugkörpers einrastbar sind.

## Beschreibung

Die Erfindung bezieht sich auf eine Vorrichtung zum Bergen von Raumflugkörpern und Transport im Orbit sowie Rückführung des Raumflugkörpers zur Erde bzw. zur gezielten Entsorgung durch Verglühen in der Erdatmosphäre, über ein angetriebenes Bergefahrzeug auch in Form eines Satelliten, wobei ein Koppelmechanismus zwischen zwei Raumflugkörpern einsetzbar ist.

Es hat sich gezeigt, daß das Einfangen und der Abtransport von defekten oder ausgedienten Raumflugkörpern, wie Raketenteilen, ausgebrannten Raketenstufen, Satelliten, Raumstationselementen nur relativ aufwendig durchführbar sind.

Ohne direktes menschliches Einwirken ist es bisher nicht möglich, defekte, nicht selbst manövrierfähige Raumflugkörper zu bergen und zu transportieren. Diese Maßnahmen sind in Fällen erforderlich, bei denen eine mögliche Beeinträchtigung des optimalen Betriebs anderer Raumsysteme, oder eine mögliche Personen- und Sachgefährdung auf der Erde durch herabstürzende, nicht in der Erdatmosphäre verglühte Teile des defekten Systems auftritt. Eine Beeinträchtigung anderer Satellitensysteme ergibt sich beispielsweise, falls der defekte Satellit nicht seine ursprüngliche Zielposition im Orbit erreicht hat und somit im Empfangs- und Sendebereich anderer Systeme diese durch seine elektromagnetische Charakteristik oder simple Abschattungseffekte stört. Ein nicht kontrolliertes Verglühen in der Erdatmosphäre ist gegeben, wenn der Raumflugkörper eine Entrittsbahn mit falschem Eintrittswinkel hat und somit ein vollständiges Verglühen in der Atmosphäre nicht erfolgen kann. Des weiteren ergibt sich in diesem Fall die Möglichkeit eines nicht gewollten Aufschlaggebiets auf der Erde, so daß eine Gefährdung von Menschen und Material besteht.

Es ist aus der US 6,017,000 eine Kopplung mit einem Triebwerk bekannt. Hierbei ist der Koppelmechanismus für eine präzise Annäherung ausgelegt und eine Verbindung bei auftretenden größeren Ablagen nicht möglich.

Ferner ist aus der DE 32 15 299 C2 eine Kopplungsvorrichtung zum Zusammenführen von Raumflugkörpern bekannt, die Abweichungen bis zu einem bestimmten Raumwinkel und einem Versatz über Trichter und Federn ausgleicht. Diese Anwendung ist aber nicht geeignet, größere Zugkräfte aufzunehmen.

Es ist Aufgabe der Erfindung eine einfache universell anwendbare Vorrichtung der gattungsgemäßen Art auszubilden, um eine wirtschaftliche Handhabung zu gewährleisten, die auch die Übertragung von Zugkräften zum Transport ermöglicht.

Die Lösung dieser Aufgabe erfolgt erfindungsgemäß dadurch, daß das Bergefahrzeug eine lösbare Aufnahme für ein mastartiges Halteelement aufweist, das an seinem freien Ende einstellbare Spreizelemente in Form von mindestens drei Armen steuerbar aufweist, die in einen korrespondierenden Interface-Ring des zu bergenden Raumflugkörpers einrastbar sind und die einstellbaren Spreizelemente im ausgefahrenen Zustand hinter einen Rezeß im Interface-Ring eingreifen und über parallel zugeordnete Federelemente zur Fixierung durch Abstützung angeordnet sind.

Hierdurch ist es möglich, auf einfache Weise eine Arretierungsvorrichtung auszugestalten, um eine Kopplung mit einem Bergefahrzeug zu ermöglichen. Das vorgeschlagene Kopplungssystem bietet gegenüber anderen Greif- und Bergungssystemen den Vorteil einer mechanisch einfachen und somit nicht störanfälligen Lösung.

Andere Systeme beruhen meist auf Robotikelementen, d. h. Greifmechanismen, die präzise an die Zielstelle herangeführt werden müssen und ebenfalls dynamische Relativbewegungen und Schwingungen ausgleichen müssen. Dieses erfordert einen komplexen, computergestützten Regel- und Kontrollkreis, der von der Bodenkontrollstelle aus überwacht und beeinflußt werden muß.

Um eine gute Anpassungsfähigkeit zur Kopplung zu erzielen wird vorgeschlagen, daß das mastartige Halteelement durch ein ausfahrbares Teleskoprohr gebildet ist.

Um eine Entkopplung der Körperdynamik der verbundenen Anordnungen zu ermöglichen, wird vorgeschlagen, daß die Aufnahme für das Halteelement lösbar mit dem Bergefahrzeug verbunden ist und über eine ausfahrbare Seilanordnung zwischen Halteelement und Bergefahrzeug als Zugorgan verbunden ist.

Zur einfachen Entkopplung wird vorgeschlagen, daß die Verbindung zwischen Halteelement und Bergefahrzeug über Sprengbolzen lösbar ausgebildet ist.

In der Zeichnung ist ein Ausführungsbeispiel der Erfindung schematisch dargestellt. Es zeigen:

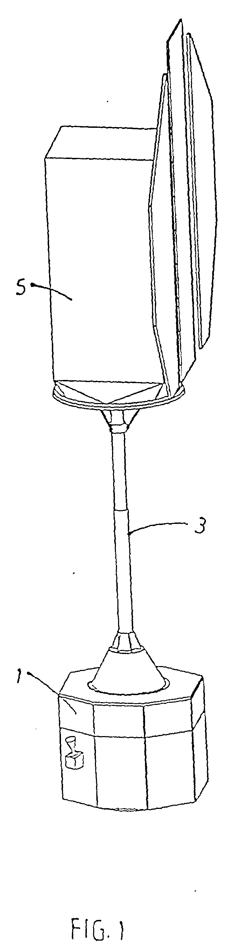

- Fig. 1: eine Gesamtdarstellung eines Raumflugkörpers mit einem Bergefahrzeug im gekoppelten Zustand,

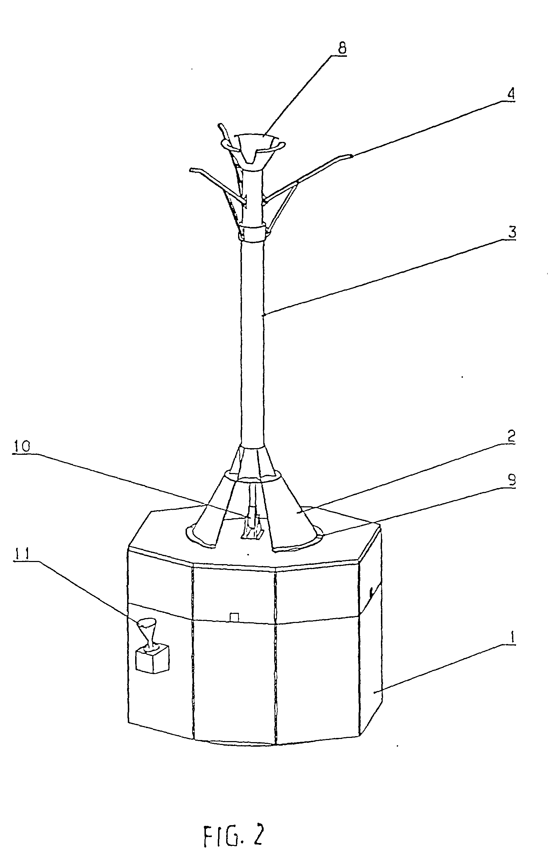

- Fig. 2: ein Bergfahrzeug mit Kopplungselementen und

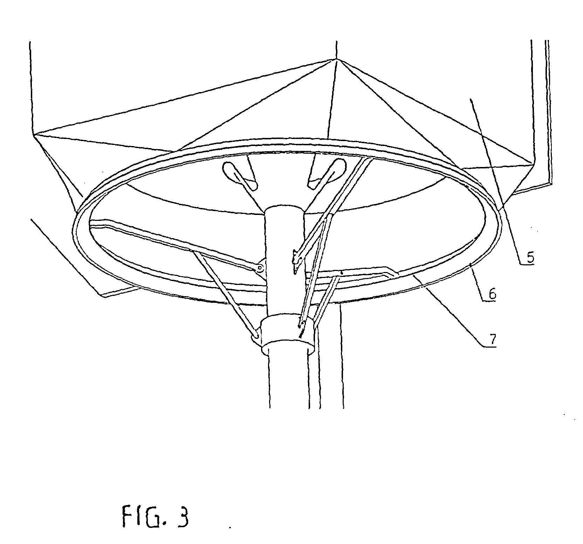

- Fig. 3: eine vergrößerte Darstellung eines Kopplungsmechanismus zum Raumflugkörper.

Ein Bergefahrzeug 1 in Form eines Satelliten ist mit einer lösbaren Aufnahme 2 verbunden, die ein Halteelement 3 in Form eines ausfahrbaren Teleskoprohres trägt. Am Ende des Halteelementes 3 sind verstellbare Spreizelemente 4 mit mindestens drei Armen angeordnet, die mit einem zu bergenden Raumflugkörper 5 in Eingriff gebracht werden.

Hierbei besitzt der zu bergende Raumflugkörper 5 einen mit den Spreizelementen 4 korrespondierenden Interface-Ring 6, wobei die Spreizelemente 4 hinter einen Rezeß 7 eingreifen und durch eine zugeordnete Federanordnung 8 fixiert gehalten werden. Der Interfacering 6 ist auch die Schnittstelle des Raumflugkörpers 5 zu seinem Starkörper.

Nach Durchführung dieser Kopplung wird die Verbindung zwischen der Aufnahme 2 und dem Bergefahrzeug 1 über entsprechende Sprengbolzen 9 gelöst und über eine flexible Anordnung, wie eine Seilanordnung 10, wird erreicht, daß lediglich Zugkräfte zwischen dem Bergefahrzeug 1 und dem zu bergenden Raumflugkörper 5 übertragen werden. Gegebenfalls ist die Seilanordnung 10 ausfahrbar, um einen größeren Abstand zwischen Bergefahrzeug 1 und dem zu bergenden Raumflugkörper 5 herzustellen.

Zum Durchführen der Bergung sind entsprechende Triebwerke 11 am Bergefahrzeug aktivierbar. Durch die flexible Anordnung 10 wird sichergestellt, daß der gemeinsame Schwerpunkt von Bergefahrzeug 1 und Raumflugkörper 5 auf der Werklinie des erzeugten Schubvektors liegt.

## Patentansprüche

1. Vorrichtung zum Bergen von Raumflugkörpern und Transport im Orbit sowie Rückführung des Raumflugkörpers zur Erde bzw. zur gezielten Entsorgung durch Verglühen in der Erdatmosphäre, über ein angetriebenes Bergefahrzeug auch in Form eines Satelliten, wobei ein Koppelmechanismus zwischen zwei Raumflugkörpern einsetzbar ist, **dadurch gekennzeichnet, daß** das Bergefahrzeug (1) eine lösbare Aufnahme (2) für ein mastartiges Halteelement (3) aufweist, das an seinem freien Ende einstellbare Spreizelemente (4) in Form von mindestens drei Armen steuerbar aufweist, die in einen korrespondierenden Interface-Ring (6) des zu bergenden Raumflugkörpers (5) einrastbar sind und die einstellbaren Spreizelemente (4) im ausgefahrenen Zustand hinter einen Rezeß (7) im Interface-Ring (6) eingreifen und über parallel zugeordnete Federelemente (8) zur Fixierung durch Abstützung angeordnet sind.

2. Vorrichtung nach Anspruch 1, **dadurch gekennzeichnet, daß** das mastartige Halteelement (3) durch ein ausfahrbares Teleskoprohr gebildet ist.

3. Vorrichtung nach Anspruch 1 oder 2, **dadurch gekennzeichnet, daß** die Aufnahme für das Halteelement (3) lösbar mit dem Bergefahrzeug (1) verbunden ist und über eine ausfahrbare Seilanordnung (10) zwischen Halteelement (3) und Bergefahrzeug (1) als Zugorgan verbunden ist.

4. Vorrichtung nach Anspruch 3, **dadurch gekennzeichnet, daß** die Verbindung zwischen Halteelement (3) und Bergefahrzeug (1) über Sprengbolzen (9) lösbar ausgebildet ist.
